# EUROPÄISCHE PATENTSCHRIFT

(11) **EP 3 425 256 B1**
(45) Veröffentlichungstag und Bekanntmachung des Hinweises auf die Patenterteilung: **27.10.2021**
(21) Anmeldenummer: 18169364.9
(22) Anmeldetag: 25.04.2018
(51) Int. Cl.: F16P 3/14

(54) **ZUGANGSABSICHERUNGSSYSTEM**
ACCESS PROTECTION SYSTEM
SYSTÈME DE PROTECTION D'ACCÈS

(30) Priorität: 06.06.2017 DE 102017112419
(43) Veröffentlichungstag der Anmeldung: 09.01.2019
(73) Patentinhaber: SICK AG, 79183 Waldkirch (DE)
(72) Erfinder: Böhler, Frank, 79206 Breisach-Gündlingen (DE)

(56) Entgegenhaltungen:
- EP-A1- 1 079 322
- EP-A1- 2 012 253
- EP-A1- 2 439 487
- EP-A2- 1 164 556
- DE-A1- 4 411 448
- DE-A1-102004 044 973
- DE-A1-102011 110 132
- DE-C1- 19 523 843

## Beschreibung

Die vorliegende Erfindung betrifft ein Zugangsabsicherungssystem für die Überwachung des Zugangs von Objekten zu einem Überwachungsbereich nach dem Oberbegriff des Anspruchs 1.

Insbesondere mit der zunehmenden Automatisierung von Fertigungsprozessen gewinnen Zugangsabsicherungssysteme zunehmend an Bedeutung. Roboter und andere selbsttätig arbeitende Maschinen stellen in der Regel ein erhebliches Gefähr-dungspotential für menschliches Personal dar, so dass sichergestellt werden muss, dass das Personal nicht in eine durch den Arbeitsbereich einer Maschine oder eines Roboters definierte Gefährdungszone eindringen kann, ohne eine Sicherheitsfunktion, z. B. eine Schutzabschaltung der Maschine oder des Roboters, auszulösen. Dies wird in der Regel durch Verwendung von optoelektronischen Sensoren, insbesondere Lichtschranken oder Lichtgittern zur Überwachung der Grenzen des Gefährdungs- oder Überwachungsbereiches oder Sicherheitslaserscannern zur Überwachung des gesamten Gefährdungs- oder Überwachungsbereiches erreicht, die die Gefahrenquelle deaktivieren, wenn eine Person oder ein Objekt in den definierten Überwachungsbereich eindringt.

Problematisch bei diesem Ansatz ist jedoch, dass bei einer Vielzahl von Anwendungen durchaus eine gewünschte Situation eintreten kann, in der einerseits für ein zugelassenes Objekt ein Eindringen in den definierten Überwachungsbereich erfolgen soll, andererseits aber die den Durchsatz reduzierende Unterbrechung des Maschinen- oder Roboterbetriebs durch die Sicherheitsfunktion weder notwendig noch erwünscht ist. Dies ist beispielsweise der Fall, wenn ein Gabelstapler verwendet wird, um Fertigungsteile oder anderes Ladegut anzuliefern oder abzuholen.

Eine bekannte Lösung für dieses Problem besteht darin, Induktionsschleifen im Boden der entsprechenden Fertigungshalle anzuordnen. Wenn die Induktionsschleifen von einem Gabelstapler überfahren werden, wird ein Signal ausgesendet, das zu einer zeitweiligen Überbrückung der Sicherheitsfunktion führt. Diese Vorgehensweise führt jedoch zu einer Reihe praktischer Probleme.

So sind Installation, Reparatur und Wartung der Induktionsschleifen teuer und mit hohem Aufwand verbunden. Zudem gibt es Interferenzeffekte zwischen verschiedenen Induktionsschleifen. Weiterhin arbeiten Induktionsschleifen in stark mit Stahl armierten Böden nicht zuverlässig. Ferner ist in Umgebungen, in denen metallische Gegenstände transportiert werden, z. B. in Brauereien, in denen Metallfässer Verwendung finden, eine fälschliche Überbrückung der Sicherheitsfunktion nicht auszuschließen.

Schließlich sind derartige Lösungen manipulationsanfällig, so dass unter Umständen die Sicherheitsfunktion in unzulässiger Weise überbrückt wird, was ein erhebliches Gefährdungspotential für das Personal in sich birgt.

Ein weiteres Problem besteht darin, dass trotz einer an sich zulässigen Betriebssituation, z. B. einer ordnungsgemäßen Materialanlieferung, die Überbrückung der Sicherheitsfunktion nicht ausgelöst wird, was zu einem außerplanmäßigen Stillstand des zu schützenden Prozesses führt. Um einen solchen Stillstand zu beenden, müssen entsprechende Rücksetzeinrichtungen, beispielsweise seilzugbetätigte Schalter, vorgesehen werden, die oftmals schwierig zu installieren und/oder anfällig für Beschädigungen sind.

Ebenfalls bekannt ist es, Objekte, deren Eindringen in den Überwachungsbereich nicht zum Auslösen der Sicherheitsfunktion führen soll, so zu markieren, dass sie mit Hilfe einer Reflexionslichtschranke identifiziert werden können. Liegt beim Eindringen in den Überwachungsbereich oder in ein dem Überwachungsbereich vorgelagertes Vorfeld gleichzeitig ein Erkennungssignal der Reflexionslichtschranke vor, so wird die Sicherheitsfunktion überbrückt. Diese Vorgehensweise erfordert aber nicht nur das Vorsehen einer zusätzlichen Reflexionslichtschranke, was kostenintensiv ist, sondern ist im realen Arbeitsumfeld, in dem es leicht zu Verschmutzungen von Reflexionselementen kommen kann, auch fehleranfällig.

Ein gattungsgemäßes Zugangsabsicherungssystem ist beispielsweise in EP 2 249 075 B1 beschrieben. Dort schließt sich dem Überwachungsbereich ein erstes und ein zweites Warnfeld an, wobei das Auslösen einer Sicherheitsfunktion dann unterdrückt wird, wenn zuvor ein Eindringen eines Objekts sowohl in das erste Warnfeld als auch in das zweite Warnfeld festgestellt wurde.

Es ist die Aufgabe der Erfindung, ein verbessertes Zugangsabsicherungssystem bereitzustellen.

DE4411448 A1 und EP2012253 A1 offenbaren Vorrichtungen die eine Kontur eines in das Vorfeld eindringenden Objekts jeweils innerhalb eines Konturerkennungsfeldes erfassen können.

Die Aufgabe wird durch ein Zugangsabsicherungssystem mit den Merkmalen des Anspruchs 1 gelöst.

Das erfindungsgemäße Zugangsabsicherungssystem für die Überwachung des Zugangs von Objekten zu einem Überwachungsbereich umfasst,
- wenigstens einen ersten optoelektronischen Sensor, welcher zum Erkennen eines Eindringens eines Objekts in den Überwachungsbereich eingerichtet ist,
- wenigstens einen zweiten optoelektronischen Sensor, welcher zur ortsauflösenden Überwachung eines dem Überwachungsbereich vorgelagerten Vorfeldes eingerichtet ist,
- und eine Auswerteeinheit, welche mit dem ersten und dem zweiten Sensor in Signalkommunikation steht, wobei die Auswerteeinheit dazu eingerichtet ist, beim Eindringen eines Objekts in den Überwachungsbereich eine Sicherheitsfunktion auszulösen, und eingerichtet ist, die Sicherheitsfunktion dann zu unterdrücken, wenn das eindringende Objekt als ein zugelassenes Objekt klassifiziert wird. Erfindungsgemäß besteht das Vorfeld aus mehreren benachbarten Konturerkennungsfeldern des zweiten Sensors. Weiter ist die Auswerteeinheit dazu eingerichtet, aufgrund von Signalen, welche von dem zweiten Sensor empfangen wurden, eine Kontur eines in das Vorfeld eindringenden Objekts jeweils innerhalb eines Konturerkennungsfeldes zu erfassen und die erfasste Kontur mit einer vorgegebenen Referenzkontur und die ermittelte Position der erfassten Kontur mit einer Referenzposition der Referenzkontur in dem jeweiligen Konturerkennungsfeld zu vergleichen, wobei die Referenzkontur darin besteht, dass das Konturerkennungsfeld auf seiner vollen Breite an der Referenzposition unterbrochen ist. Die Auswerteeinheit ist weiter eingerichtet, das eindringende Objekt nur dann als ein zulässiges Objekt zu klassifizieren, wenn die erfasste Kontur der Referenzkontur an der Referenzposition entspricht.

Dem liegt der Gedanke zugrunde, die Sicherheitsfunktion nur dann zu unterdrücken, wenn ein in das Vorfeld eindringendes Objekt aufgrund einer Kontur dieses Objekts als zugelassenes Objekt erkannt wird. Dazu ist das Vorfeld in mehrere benachbarte Konturerkennungsfelder des zweiten Sensors eingeteilt.

Dabei ist ein Konturerkennungsfeld derart definiert, dass in diesem Feld vom Laserscanner eine Kontur der Umgebung überwacht wird. Der Laserscanner schaltet die zugehörigen Ausgänge in den AUS-Zustand, wenn eine Kontur nicht den eingestellten Vorgaben entspricht.

Die Auswerteeinheit muss nur noch zwei einfache Kriterien abprüfen, nämlich erstens, ob die erfasste Kontur des Objekts sich an einer vorbestimmten Position, nämlich der Referenzposition, befindet, und zweitens, ob das jeweilige Konturerkennungsfeld auf seiner vollen Breite an der Referenzposition von dem Objekt unterbrochen ist. Ist das der Fall, dann kann es nur das zulässige Objekt sein. Die Konturerkennungsfelder sind in ihrer Größe also so angelegt, dass nicht-zulässige Objekte, z. B. das Bein einer Person, diese Bedingungen, insbesondere die Bedingung, dass das Objekt das Konturerkennungsfeld auf der vollen Breite unterbrechen muss, nicht erfüllen kann.

Damit ist eine im Arbeitsablauf automatisch und damit einfach zu handhabende Deaktivierung der Sicherheitsfunktion sichergestellt, die dennoch zuverlässig zwischen nicht-zulässigen und zulässigen Objekten unterscheiden kann.

Bei der Prüfung, ob die erfasste Kontur der Referenzkontur entspricht, bzw. ob die ermittelte Position der zugehörigen Referenzposition entspricht, können selbstverständlich bestimmte Toleranzgrenzen zur Anwendung gelangen, um zu vermeiden, dass eine Unterdrückung der Sicherheitsfunktion nur deshalb unterbleibt, weil eine erfasste Kontur geringfügig von der Referenzkontur oder eine erfasste Position geringfügig von der Referenzposition abweicht.

In dem vorliegenden Text ist der Begriff "Kontur" nicht so zu verstehen, dass damit notwendigerweise zum Beispiel ein Profil eines Gegenstandes gemeint sei, obwohl damit der erfindungsgemäße Gedanke ebenfalls verwirklicht werden kann. Es kann aber auch ausreichen, dass zum Beispiel geprüft wird, ob sich an erwarteten Positionen Teile des Gegenstandes befinden.

Die Sicherheitsfunktion kann insbesondere darin bestehen, eine überwachte Maschine oder einen überwachten Roboter zu stoppen oder in seiner Arbeitsgeschwindigkeit zu reduzieren. Alternativ oder zusätzlich kann auch lediglich ein Alarm ausgelöst werden.

Vorteilhafterweise ist der zweite Sensor dazu ausgelegt, eine horizontale, insbesondere bodennahe Abtastfläche zu überwachen, d. h. die Konturerkennungsfelder liegen horizontal. Je nach Auslegung des zweiten Sensors kann der Abtastbereich und damit die Konturerkennungsfelder sich sektorförmig in lateraler Richtung betrachtet und mit Haupterstreckungsrichtung parallel zu einer abgetasteten Bodenfläche z. B. entlang der Einfahrtroute eines Gabelstaplers, erstrecken.

Es ist vorteilhaft, wenn die Konturerkennungsfelder sich überlappen, um eine Kontur eines zulässigen Objekts lückenlos im Vorfeld verfolgen zu können.

Vorteilhafterweise kann der zweite Sensor die das Vorfeld definierenden Konturer-kennungsfelder simultan oder alternativ zyklisch nacheinander überwachen.

Gemäß einer vorteilhaften Ausführungsform der Erfindung ist der zweite Sensor ein Laserscanner, insbesondere ein Sicherheitslaserscanner. Derartige Sensoren sind besonders geeignet, die Objektkonturen und deren zugehörige Positionen zweidimensional zu erfassen.

In Weiterbildung der Erfindung ist die Auswerteeinheit ausgebildet, die Sicherheitsfunktion auszulösen bzw. zu unterdrücken in Abhängigkeit einer Reihenfolge der Unterbrechungen der benachbarten Konturerkennungsfelder. So kann z. B. die Einfahrt eines Material anliefernden Gabelstaplers verfolgt und überwacht werden.

Gemäß einer weiteren vorteilhaften Ausführungsform der Erfindung ist die Auswerteeinheit ferner dazu eingerichtet, die Sicherheitsfunktion zusätzlich nur dann zu unterdrücken, wenn außer einem oder mehreren zugelassenen Objekten kein weiteres, nicht zugelassenes Objekt, insbesondere keine Person, in das Vorfeld eingedrungen ist. Insbesondere wird ein Erfassungssignal des zweiten Sensors nicht nur dahingehend ausgewertet, ob die eingangs erläuterte Übereinstimmung bezüglich der Kontur und der Position eines zugelassenen Objekts gegeben ist, sondern ob in dem Vorfeld gegebenenfalls auch unbekannte oder explizit als nicht zugelassen erkannte Konturen vorhanden sind bzw. sich diese Konturen, die gegebenenfalls auch an sich als zugelassen erkannt worden sind, an nicht zulässigen Positionen detektiert wurden.

Vorteilhafterweise ist in dem Vorfeld ein Annäherungskorridor vorgegeben, innerhalb dessen ein zugelassenes Objekt in das Vorfeld eindringen muss, damit es als zugelassenes Objekt erkannt werden kann. Der Annäherungskorridor kann beispielsweise durch geeignete Bodenmarkierungen gekennzeichnet sein. Dadurch wird gewährleistet, dass ein an sich zugelassenes Objekt nur deshalb nicht erkannt wird, weil es sich dem zweiten Sensor aus einer falschen Richtung annähert und deshalb beispielsweise die Referenzpositionen verfehlt.

In Weiterbildung der Erfindung ist die Auswerteeinheit dazu ausgebildet, dass wenn ein zulässiges Objekt in einem der Konturerkennungsfelder erkannt wird, dieses Objekt über die benachbarten Konturerkennungsfelder verfolgt wird.

Vorteilhafterweise umfasst der erste Sensor eine Lichtschranke, ein Lichtgitter oder einen Laserscanner, wobei auch mehrere erste Sensoren vorgesehen sein können, die verschiedenen Sensortypen miteinander zu kombinieren.

In Weiterbildung der Erfindung ist die Auswerteeinheit dazu ausgebildet, dass sowohl die Reihenfolge der Belegung und Freigabe der Konturerkennungsfelder als auch die maximale Verweildauer des zugelassenen Objekts im Feld überwacht wird.

Im Folgenden wir die Erfindung anhand eines Ausführungsbeispiels mit Bezug auf die Zeichnung beschrieben. Es zeigen:
- Fig. 1: eine Szene mit einem erfindungsgemäßen Zugangsabsicherungssystem in Draufsicht;
- Fig. 2: eine Seitenansicht der Szene von Fig. 1;.
- Fig. 3 bis 5: Szenen verschiedener Arbeitssituationen in der Darstellung wie Fig. 1.

Bei den in den Figuren dargestellten Szenen dient ein beispielhaftes Zugangsabsicherungssystem 10 dazu, eine nicht dargestellte Maschine, beispielsweise ein Bearbeitungsroboter oder eine Verpackungsmaschine, vor einem unkontrollierten Zutritt von Bedienpersonal abzusichern. Von der Maschine ist lediglich ein Materialübergabeplatz 12 gezeigt, auf den Bearbeitungsgut 14 durch einen Gabelstapler 16 oder andere Flurförderfahrzeuge angeliefert oder abgeholt werden kann. Die Maschine ist von einem nur abschnittsweise dargestellten Zaun 18 umgeben, welcher eine Zugangsöffnung 20 im Bereich des Materialübergabeplatzes 12 aufweist.

Das Zugangsabsicherungssystem 10 umfasst einen ersten optoelektronischen Sensor, beispielsweise ein aus Lichtsender 24 und Lichtempfänger 26 bestehendes Sicherheits-Lichtgitter 22, welches mittels Lichtstrahlen 25 einen Durchgriff durch die Zugangsöffnung 20 überwacht, also ein Eindringen eines Objekts in seinen Überwachungsbereich, bestehend aus den Lichtstrahlen 25, erkennt. Erfolgt ein Durchgriff, dann wird dies als potentielle Gefahr bewertet und eine Sicherheitsfunktion ausgelöst und die Maschine in einen sicheren, gefahrlosen Zustand gebracht.

Anstelle eines Lichtgitters kann ein beliebig anderer Sicherheits-Sensor, beispielsweise ein Sicherheitslaserscanner, eingesetzt werden.

Damit das Sicherheits-Lichtgitter 22 nicht bei einer zulässigen, gefahrlosen Materialzuführung eine Sicherheitsfunktion auslöst, ist ein zweiter optoelektronischen Sensor 28 vorgesehen, welcher zur ortsauflösenden Überwachung eines dem Überwachungsbereich 20 vorgelagerten Vorfeldes 30 eingerichtet ist.

Des Weiteren ist eine Auswerteeinheit 32 vorgesehen, die mit dem ersten Sensor 22 und dem zweiten Sensor 28 in Signalkommunikation steht. Die Auswerteeinheit 32 ist dazu eingerichtet, unter anderem zwei wesentliche Funktionen auszuüben. Erstens löst sie beim Eindringen eines Objekts in die Zugangsöffnung 20 die Sicherheitsfunktion aus und zweitens unterdrückt sie die Sicherheitsfunktion, wenn das eindringende Objekt als ein zulässiges Objekt, was z. B. zu bearbeitendes Material sein kann, klassifiziert wird.

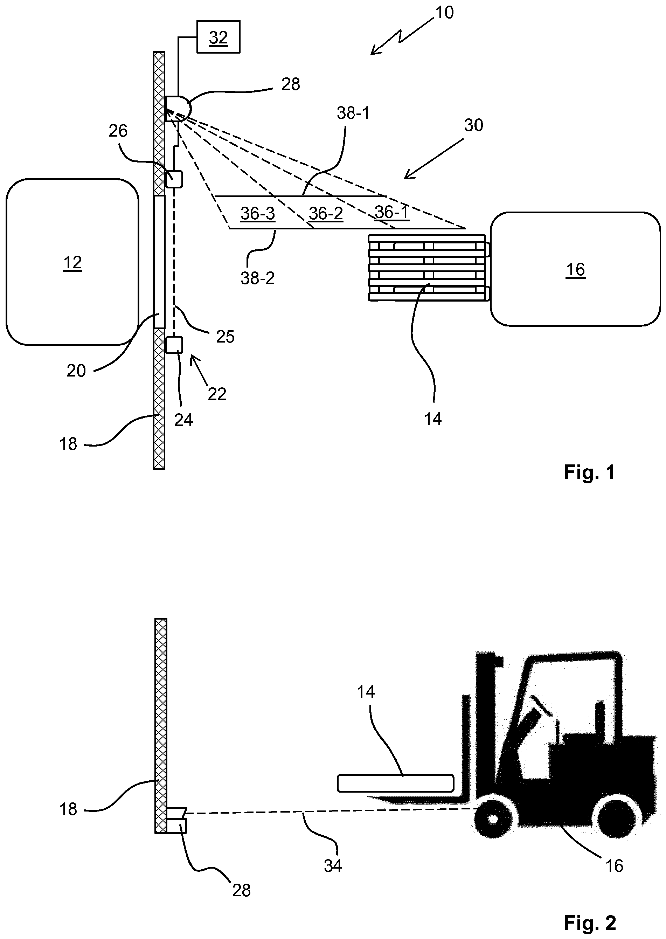

Diese Klassifizierung erfolgt mit dem zweiten Sensor 28, was den Kern der Erfindung darstellt. Der zweite Sensor 28 ist vorzugsweise als Laserscanner ausgebildet und umfasst mit seinem Scanbereich zumindest einen Teilbereich des Vorfelds 30. Seine Scanebene 34 ist bevorzugt horizontal und bodennah, um nicht das Bearbeitungsgut 14 auf der Gabel des Gabelstaplers 16 zu erfassen, sondern den Gabelstapler 16 selber (Fig. 2).

Das Vorfeld 30 umfasst in diesem Beispiel drei, benachbarte Konturerkennungsfelder 36-1, 36-2 und 36-3 des Laserscanners 28. Diese Konturerkennungsfelder werden vom Gabelstapler 16 bei der Materialanlieferung zumindest berührt, also der Gabelstapler dringt in diese Konturerkennungsfelder ein.

An der Art und Weise oder besser gesagt an dem Umfang der Belegung dieser drei Konturerkennungsfelder 36-1, 36-2 und 36-3 erkennt die Auswerteeinheit innerhalb von jedem der drei Konturerkennungsfelder Konturen von Teilen des in das Vorfeld 30 eindringenden Gabelstaplers 16.

Diese erfassten Konturen werden mit vorgegebenen Referenzkonturen und die ermittelte Position der erfassten Konturen mit vorgegeben Referenzpositionen der Referenzkonturen in dem jeweiligen Konturerkennungsfeld verglichen. Kann die Auswerteeinheit aus den Konturen schließen, dass es der Gabelstapler 16 sein muss, dann wird das Sicherheits-Lichtgitter 22 stumm geschaltet und das Bearbeitungsgut 14 kann ohne Auslösen der Sicherheitsfunktion und damit ohne Unterbrechung der Maschinenfunktion durch die Zugangsöffnung 20 hindurch auf dem Materialübergabeplatz 12 vom Gabelstapler 16 abgelegt werden.

Dabei besteht die Referenzkontur für jedes Konturerkennungsfeld darin, dass das jeweilige Konturerkennungsfeld 36-1 bzw. 36-2 bzw. 36-3 auf seiner vollen Breite an der jeweiligen Referenzposition, d. h. in einem definierten Abstand vom Laserscanner 28 unterbrochen ist.

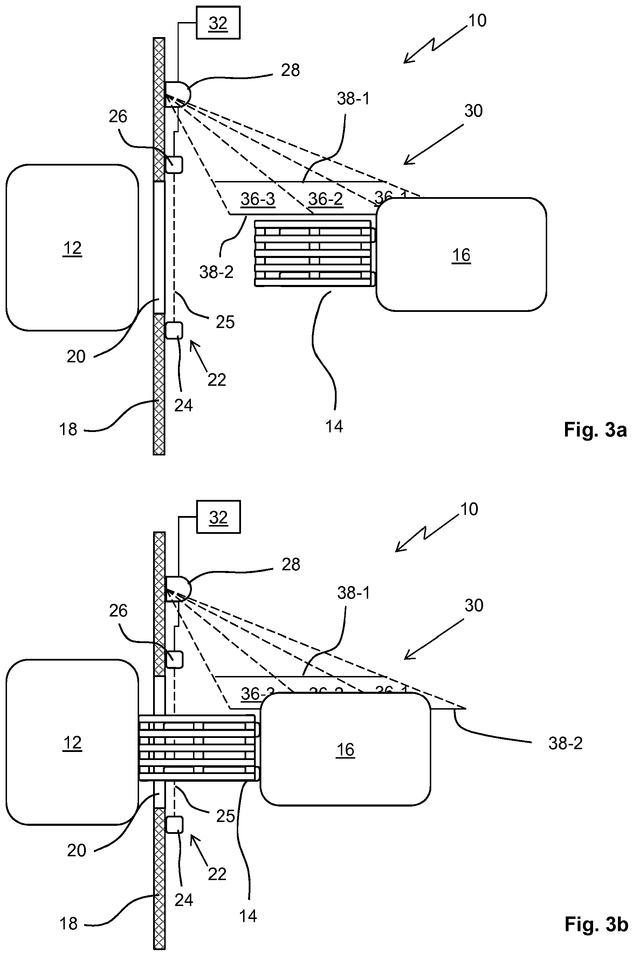

Im Einzelnen erfolgt dies wie folgt:
Der Gabelstapler 16 fährt an die Zugangsöffnung 20 heran und befindet sich zunächst in einer Position wie in Fig. 3a dargestellt. Dann erkennt die Auswerteeinheit 32 aus den Signalen des zweiten Sensors 28, dass das Konturerkennungsfeld 36-1 auf voller Breite in dem durch die parallelen Linien 38-1 und 38-2 eingegrenzten Entfernungsbereich belegt ist. Eine solche Belegung entspricht einer hinterlegten Referenzkontur für dieses erste Konturerkennungsfeld 36-1. Damit "weiß" die Auswerteeinheit, dass es sich um einen zulässigen Gabelstapler 16 handelt und nicht um ein sonstiges nicht-zulässiges Objekt z. B. in Form eines Beines einer Person, das nämlich aufgrund seiner zu geringen Ausdehnung nicht das Konturerkennungsfeld 36-1 in voller Breite unterbrechen könnte.

Das Stummschalten der Sicherheitsfunktion kann initiiert werden.

Der weitere Verfahrweg kann nun weiter verfolgt werden. Bei weiterer Annäherung wird der Gabelstapler auch das Konturerkennungsfeld 36-2 auf voller Breite unterbrechen (Fig. 3b). Die Sicherheitsfunktion bleibt stumm geschaltet, da das, wie bereits zuvor bzgl. Konturerkennungsfeld 36-1 erläutert, eine zulässige Belegung darstellt, die durch die Referenzkontur in richtiger Referenzposition von der Auswerteeinheit 32 erkennbar ist.

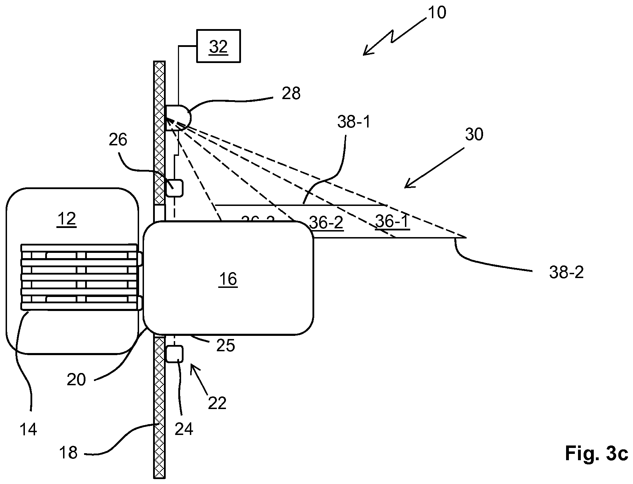

Schließlich kann der Gabelstapler 16 sich der Zugangsöffnung 20 soweit nähern wie in Fig. 3c gezeigt. In dieser Position ist das dritte Konturerkennungsfeld 36-3 gerade noch in voller Breite von dem Gabelstapler 16 unterbrochen, so dass dies, wie oben zu den beiden anderen Konturerkennungsfeldern erläutert, noch einer zulässigen Bedingung entspricht.

Für alle anderen Fälle, also wenn z. B. der Gabelstapler 16 weiter als in Fig. 3c dargestellt in die Zugangsöffnung 20 einfährt, erkennt die Auswerteeinheit 32, dass die Referenzkontur im dritten Konturerkennungsfeld 36-3 nicht mehr erfüllt ist und auch in keinem der anderen beiden Konturerkennungsfeldern 36-2 und 36-1. Dann wird die Stummschaltung aufgehoben. Im Fall, dass der erste Sensor dann ein Objekt detektiert, wird die Sicherheitsfunktion ausgelöst.

Gleiches gilt, wenn im Vorfeld 30 ein anderes oder ein zusätzliches Objekt mittels des zweiten Sensors 28 erkannt wird.

In einer Variation der Erfindung können sich jeweils benachbarte Konturerkennungsfelder 36-1 und 36-2 bzw. 36-2 und 36-3 überlappen. Das ist vorteilhaft, damit der Gabelstapler 16 besser "verfolgt" werden kann. Der Überlapp beträgt vorteilhafterweise 50% der Konturerkennungsfeldbreite, wobei die "Breite" in Fahrtrichtung des Gabelstaplers 16 gemessen ist (Fig. 3).

Die einzelnen Konturerkennungsfelder können zyklisch abgeprüft werden. Hierdurch ergibt sich eine maximale Annäherungsgeschwindigkeit des Gabelstaplers 16, da erst nach einem Zyklus alle Felder gelesen wurde.

Um die Zykluszeit zu verringern, kann eine intelligente Konturerkennungsfeldumschaltung realisiert werden. Wenn der Gabelstapler weit entfernt ist, muss nur das erste Konturerkennungsfeld 36-1 aktiviert sein und überwacht werden. Wenn der Gabelstapler sich nähert und das erste Konturerkennungsfeld 36-1 in voller Breite belegt ist, wird das zweite Konturerkennungsfeld 36-2 zusätzlich aktiviert. Wenn der Gabelstapler 16 dann weiter einfährt, muss das dritte Konturerkennungsfeld 36-3 aktiviert werden und das erste kann wieder deaktiviert werden.

Wenn der Laserscanner mit einem Scan mehrere Felder abprüfen kann, stehen eine ausreichende Anzahl an simultanen Konturerkennungsfeldern zur Verfügung und es entfällt die Notwendigkeit der zyklischen Umschaltung der Feldsätze.

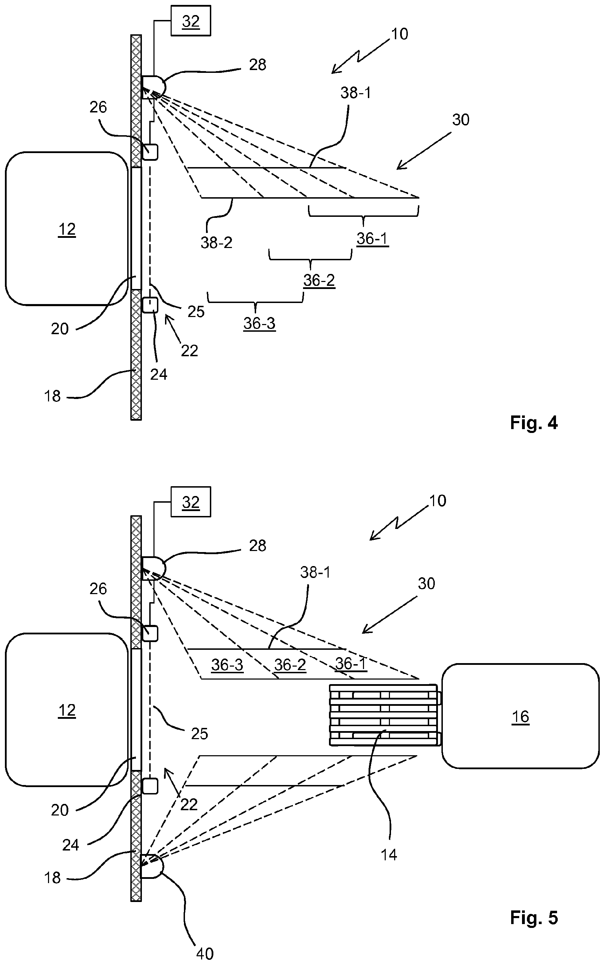

In den bisher beschriebenen Ausführungen ist ein Laserscanner 28 vorgesehen, der den Gabelstapler 16 von nur einer Seite her erfasst. In weiterer Ausgestaltung kann ein weiterer zweiter Sensor 40 vorgesehen sein, der den Gabelstapler auch von der anderen Seite erfassen kann (Fig. 4).

### Bezugszeichenliste

- 10: Zugangsabsicherungssystem
- 12: Materialübergabeplatz
- 14: Bearbeitungsgut
- 16: Gabelstapler
- 18: Zaun
- 20: Zugangsöffnung
- 22: erster Sensor, Sicherheits-Lichtgitter
- 24: Lichtsender
- 25: Lichtstrahlen
- 26: Lichtempfänger
- 28: zweiter Sensor, Laserscanner
- 30: Vorfeld
- 32: Auswerteeinheit
- 34: Scanebene
- 36-1: erstes Konturerkennungsfeld
- 36-2: zweites Konturerkennungsfeld
- 36-3: drittes Konturerkennungsfeld
- 38-1: Konturerkennungsfeldgrenze
- 38-2: Konturerkennungsfeldgrenze
- 40: zweiter Sensor (Möglichkeit eines weiteren Sensors)

## Patentansprüche

1. Zugangsabsicherungssystem für die Überwachung des Zugangs von Objekten (14, 16) zu einem Überwachungsbereich (20, 25),
- mit wenigstens einem ersten optoelektronischen Sensor (22), welcher zum Erkennen eines Eindringens eines Objekts in den Überwachungsbereich (20, 25) eingerichtet ist,
- mit wenigstens einem zweiten optoelektronischen Sensor (28; 40), welcher zur ortsauflösenden Überwachung eines dem Überwachungsbereich (20, 25) vorgelagerten Vorfeldes (30) eingerichtet ist,
- und mit einer Auswerteeinheit (32), welche mit dem ersten und dem zweiten Sensor (22, 28, 40) in Signalkommunikation steht, wobei die Auswerteeinheit (32) dazu eingerichtet ist, beim Eindringen eines Objekts (14, 16) in den Überwachungsbereich (20, 25) eine Sicherheitsfunktion auszulösen, und eingerichtet ist, die Sicherheitsfunktion dann zu unterdrücken, wenn das eindringende Objekt (14, 16) als ein zugelassenes Objekt (14, 16) klassifiziert wird,
**dadurch gekennzeichnet,**
- **dass** das Vorfeld (30) aus mehreren benachbarten Konturerkennungsfeldern (36-1, 36-2, 36-3) des zweiten Sensors (28) besteht,
- **dass** die Auswerteeinheit (32) dazu eingerichtet ist, aufgrund von Signalen, welche von dem zweiten Sensor (28) empfangen wurden, eine Kontur eines in das Vorfeld (30) eindringenden Objekts (16) jeweils innerhalb eines Konturerkennungsfeldes (36-1 bzw. 36-2 bzw. 36-3) zu erfassen und die erfasste Kontur mit einer vorgegebenen Referenzkontur und die ermittelte Position der erfassten Kontur mit einer Referenzposition der Referenzkontur in dem jeweiligen Konturerkennungsfeld (36-1 bzw. 36-2 bzw. 36-3) zu vergleichen, wobei die Referenzkontur darin besteht, dass das Konturer-kennungsfeld (36-1 bzw. 36-2 bzw. 36-3) auf seiner vollen Breite an der Referenzposition unterbrochen ist,
- und die Auswerteeinheit (32) weiter eingerichtet ist, das eindringende Objekt (14, 16) nur dann als ein zulässiges Objekt (14, 16) zu klassifizieren, wenn die erfasste Kontur der Referenzkontur an der Referenzposition entspricht.

2. Zugangsabsicherungssystem (10) nach Anspruch 1, **dadurch gekennzeichnet, dass** die Konturerkennungsfelder des zweiten Sensors sich horizontal erstrecken und benachbart sind.

3. Zugangsabsicherungssystem (10) nach Anspruch 2, **dadurch gekennzeichnet, dass** die Konturerkennungsfelder sich überlappen.

4. Zugangsabsicherungssystem (10) nach einem der vorhergehenden Ansprüche, **dadurch gekennzeichnet, dass** der zweite Sensor die Konturerkennungsfelder simultan überwacht.

5. Zugangsabsicherungssystem (10) nach einem der vorhergehenden Ansprüche 1 bis 3, **dadurch gekennzeichnet, dass** der zweite Sensor die Konturer-kennungsfelder zyklisch nacheinander abscannt.

6. Zugangsabsicherungssystem (10) nach einem der vorhergehenden Ansprüche, **dadurch gekennzeichnet, dass** die Auswerteeinheit ausgebildet ist, die Sicherheitsfunktion auszulösen bzw. zu unterdrücken in Abhängigkeit einer Reihenfolge der Belegung und Freigabe der Konturerkennungsfelder und/oder die Auswerteeinheit weiter ausgebildet ist, die zeitliche Begrenzung der Verweildauer des zugelassenen Objekts im Konturerkennungsfeld aufzunehmen.

7. Zugangsabsicherungssystem (10) nach einem der vorhergehenden Ansprüche, **dadurch gekennzeichnet, dass** der zweite Sensor (28) einen Laserscanner, insbesondere einen Sicherheits-Laserscanner, umfasst.

8. Zugangsabsicherungssystem (10) nach einem der vorhergehenden Ansprüche, **dadurch gekennzeichnet, dass** die Auswerteeinheit ferner dazu eingerichtet ist, die Sicherheitsfunktion zusätzlich nur dann zu unterdrücken, wenn außer einem oder mehreren zugelassenen Objekten kein weiteres, nicht-zulässiges Objekt, insbesondere keine Person, in das Vorfeld (30) eingedrungen ist.

9. Zugangsabsicherungssystem (10) nach einem der vorhergehenden Ansprüche, **dadurch gekennzeichnet, dass** die Auswerteeinheit dazu ausgebildet ist, dass wenn ein zulässiges Objekt in einem der Konturerkennungsfelder erkannt wird, diese Objekt über die benachbarten Konturerkennungsfelder verfolgt wird.

10. Zugangsabsicherungssystem (10) nach einem der vorhergehenden Ansprüche, **dadurch gekennzeichnet, dass** der erste Sensor (22) eine Lichtschranke, ein Lichtgitter oder einen Laserscanner umfasst.

## Claims

1. Access protection system for monitoring the access of objects (14, 16) to a monitored area (20, 25),
- having at least one first optoelectronic sensor (22) which is set up to detect an intrusion of an object into the monitored area (20, 25),
- having at least one second optoelectronic sensor (28; 40) which is set up for the spatially resolved monitoring of a prefield (30) located upstream of the monitored area (20, 25),
- and having an evaluation unit (32) which is in signal communication with the first and the second sensor (22, 28, 40), the evaluation unit (32) being set up to trigger a safety function when an object (14, 16) penetrates the monitored area (20, 25), and being set up to suppress the safety function when the penetrating object (14, 16) is classified as an approved object (14, 16),
**characterized**
- **in that** the prefield (30) comprises a plurality of adjacent contour detection fields (36-1, 36-2, 36-3) of the second sensor (28),
- **in that** the evaluation unit (32) is set up to detect, on the basis of signals which have been received from the second sensor (28), a contour of an object (16) penetrating into the prefield (30), in each case within a contour detection field (36-1 or 36-2 or 36-3), and to compare the detected contour with a predetermined reference contour, and to compare the detected position of the detected contour with a reference position of the reference contour in the respective contour detection field (36-1 or 36-2 or 36-3), wherein the reference contour consists of the fact that the contour detection field (36-1 or 36-2 or 36-3) is interrupted on its full width at the reference position,
- and the evaluation unit (32) is further arranged to classify the penetrating object (14, 16) as an approved object (14, 16) only if the detected contour corresponds to the reference contour at the reference position.

2. Access protection system (10) according to claim 1, **characterized in that** the contour detection fields of the second sensor extend horizontally and are adjacent.

3. Access protection system (10) according to claim 2, **characterized in that** the contour detection fields overlap.

4. Access protection system (10) according to any one of the preceding claims, **characterized in that** the second sensor simultaneously monitors the contour detection fields.

5. Access protection system (10) according to any one of the preceding claims 1 to 3, **characterized in that** the second sensor scans the contour detection fields cyclically in succession.

6. Access protection system (10) according to one of the preceding claims, **characterized in that** the evaluation unit is designed to trigger or suppress the safety function in dependence of a sequence of occupancy and release of the contour detection fields and/or the evaluation unit is further designed to record the time limit of the dwell time of the approved object in the contour detection field.

7. Access protection system (10) according to any one of the preceding claims, **characterized in that** the second sensor (28) comprises a laser scanner, in particular a safety laser scanner.

8. Access protection system (10) according to one of the preceding claims, **characterized in that** the evaluation unit is further designed to additionally suppress the safety function only if, apart from one or more approved objects, no further, non-approved object, in particular no person, has entered the prefield (30).

9. Access protection system (10) according to any one of the preceding claims, **characterized in that** the evaluation unit is adapted such that when an approved object is detected in one of the contour detection fields, this object is tracked over the adjacent contour detection fields.

10. Access protection system (10) according to any one of the preceding claims, **characterized in that** the first sensor (22) comprises a light barrier, a light grid or a laser scanner.

## Revendications

1. Système de protection d'accès pour surveiller l'accès d'objets (14, 16) à une zone surveillée (20, 25),
- ayant au moins un premier capteur optoélectronique (22) qui est configuré pour détecter une intrusion d'un objet dans la zone surveillée (20, 25),
- avec au moins un deuxième capteur optoélectronique (28; 40) qui est conçu pour la surveillance à résolution spatiale d'un pré-champ (30) situé en amont de la zone surveillée (20, 25),
- et ayant une unité d'évaluation (32) qui est en communication de signal avec le premier et le second capteur (22, 28, 40), l'unité d'évaluation (32) étant configurée pour déclencher une fonction de sécurité lorsqu'un objet (14, 16) pénètre dans la zone surveillée (20, 25), et étant configurée pour supprimer la fonction de sécurité lorsque l'objet pénétrant (14, 16) est classé comme un objet approuvé (14, 16),
**caractérisé**
- **en ce que** le pré-champ (30) comprend une pluralité de champs de détection de contour adjacents (36-1, 36-2, 36-3) du second capteur (28),
- **en ce que** l'unité d'évaluation (32) est configurée pour détecter, sur la base de signaux qui ont été reçus du deuxième capteur (28), un contour d'un objet (16) pénétrant dans le pré-champ (30), à chaque fois à l'intérieur d'un champ de détection de contour (36-1 ou 36-2 ou 36-3), et pour comparer le contour détecté avec un contour de référence prédéterminé, et de comparer la position détectée du contour détecté avec une position de référence du contour de référence dans le champ de détection de contour respectif (36-1 ou 36-2 ou 36-3), dans lequel le contour de référence consiste en ce que le champ de détection de contour (36-1 ou 36-2 ou 36-3) est interrompu sur toute sa largeur à la position de référence,
- et l'unité d'évaluation (32) est en outre agencée pour classer l'objet pénétrant (14, 16) comme un objet approuvé (14, 16) uniquement si le contour détecté correspond au contour de référence à la position de référence.

2. Système de protection d'accès (10) selon la revendication 1, **caractérisé en ce que** les zones de détection de contour du deuxième capteur s'étendent horizontalement et sont adjacentes.

3. Système de protection d'accès (10) selon la revendication 2, **caractérisé en ce que** les zones de détection de contour se chevauchent.

4. Système de protection d'accès (10) selon l'une des revendications précédentes, **caractérisé en ce que** le deuxième capteur surveille simultanément les zones de détection de contour.

5. Système de protection d'accès (10) selon l'une des revendications précédentes 1 à 3, **caractérisé en ce que** le deuxième capteur balaie les zones de détection de contour de manière cyclique et successive.

6. Système de protection d'accès (10) selon l'une des revendications précédentes, **caractérisé en ce que** l'unité d'évaluation est conçue pour déclencher ou supprimer la fonction de sécurité en fonction d'une séquence d'occupation et de libération des champs de détection de contour et/ou l'unité d'évaluation est en outre conçue pour enregistrer la limite temporelle du temps de séjour de l'objet autorisé dans le champ de détection de contour.

7. Système de protection d'accès (10) selon l'une des revendications précédentes, **caractérisé en ce que** le deuxième capteur (28) comprend un scanner laser, notamment un scanner laser de sécurité.

8. Système de protection d'accès (10) selon l'une des revendications précédentes, **caractérisé en ce que** l'unité d'évaluation est également conçue pour ne supprimer en outre la fonction de sécurité que si, en dehors d'un ou plusieurs objets autorisés, aucun autre objet non autorisé, en particulier aucune personne, n'a pénétré dans le pré-champ (30).

9. Système de protection d'accès (10) selon l'une des revendications précédentes, **caractérisé en ce que** l'unité d'évaluation est adaptée de telle sorte que lorsqu'un objet approuvé est détecté dans l'une des zones de détection de contour, cet objet est suivi sur les zones de détection de contour adjacentes.

10. Système de protection d'accès (10) selon l'une des revendications précédentes, **caractérisé en ce que** le premier capteur (22) comprend une barrière lumineuse, une grille lumineuse ou un scanner laser.
